Europäisches Patentamt

European Patent Office

Office européen des brevets

(11) Publication number: **0 689 145 A1**

# EUROPEAN PATENT APPLICATION

(21) Application number: **95109682.5**

(22) Date of filing: **22.06.95**

(51) Int. Cl.6: **G06F 13/376**

(30) Priority: **23.06.94 IT TO940522**

(43) Date of publication of application:
**27.12.95 Bulletin 95/52**

(84) Designated Contracting States:
**DE ES FR GB**

(71) Applicant: **TEKNOX S.r.l.**
**Via Don Caustico, 123**
**I-10095 Grugliasco (Torino) (IT)**

(72) Inventor: **Bosio, Pier Giorgio**
**Corso Monte Cucco 81**
**I-10141 Torino (IT)**
Inventor: **Gioannini, Luca**
**Corso Re Umberto 55**
**I-10128 Torino (IT)**

(74) Representative: **Bosotti, Luciano et al**
**c/o JACOBACCI & PERANI S.p.A.**
**Corso Regio Parco, 27**
**I-10152 Torino (IT)**

(54) **A process for controlling access to a bus by several systems, for example for application in the domotic field, and associated interface devices**

(57) In order to control access of several systems ($S_{10}$, $S_{11}$, ...; $S_{20}$, $S_{21}$, ...; $S_{30}$, $S_{31}$, ...) each operating according to its own specific mode, such as protocol, speed of transmission etc. to a common bus (B) there is provided a time division of access to the bus between the various systems. At the end of its transmission cycle the system which controls the bus (B) at the time generates an event constituting a synchronisation base for all the devices present on line. These then contribute to the formation of a successive conflict byte which leads to the identification of the system destined to gain control of the bus (B).

FIG. 1

## Field of the invention

The present invention relates in general to the problem of controlling the access of several systems to a bus. It has been developed with particular attention to possible applications in the domotic field.

## Description of the prior art - technical problem on which the invention is based

The problem of allowing access by several systems to a communication resource configured as a bus structure has been encountered very widely in the art.

One solution which has been widely used is that which provides generally for communication protocols. In this case, each device linked to the bus is configured in such a way as to be able to transmit and/or receive messages which incorporate at least one string of logic symbols (the so-called communication protocol) which identify for example the transmitting unit, the unit to which it is transmitting, as well as other characteristics of the information message. There are usually also provided characteristics which allow regulation of conflict or collision phenomena, which arise when several devices seek to gain access to the bus simultaneously.

There are equally known solutions which provide a more rigid division of the available resource, acting in general in accordance with time division criteria. In practice, each system or device connected to the bus is periodically allocated a certain time window during which the system or device selected at the time is authorised to access the bus.

Both of the above-indicated arrangements require, as an almost imperative requirement, to know in advance the characteristics of the systems connected to the bus (for example the number of these systems, the characteristics of the connected units, the speed of transmission etc).

In the case of the use of a protocol, such preliminary information is necessary for example to be able to arrange, within the protocol itself, a number of characters sufficient to represent all the devices which access the bus. This also affects the possible arrangement of arbitration systems able to regulate the conflict or collision situations.

In the case of rigid time division systems the same information is necessary in order to be able to organise the sequence of allotment of the time windows, the length and frequency for which these are assigned etc.

Arrangements of the above-specified type cannot be considered as optimum in sectors such as, for example, that currently referred to as "home automation" (that is to say intelligent electronic systems within domestic environments) which envisages the presence, within a building such as a civil building, of an assembly of systems able to supervise various functions (intruder alarm, detection of the escape of gas or the commencement of a fire, temperature detection with consequent adjustment of the air conditioning system, automatic operation of opening and closing devices including shutters and curtains, possible diffusion of demand and response messages within the domestic environment etc).

In this specific context it is in fact necessary to take account of various fundamental requirements:

- the individual systems are in general made by different producers operating in an independent manner in different countries with the consequent impossibility objectively, even for a large number of producers, of operating in conditions of compatibility with other systems as far as the utilisation of a common bus structure is concerned;

- the number of systems included in the domotic equipment of a building is intended to evolve over time with the possible gradual addition of new systems and the consequent impossibility of arranging at the outset which and how many systems will be connected to the bus structure; and

- the cost of the system must be held down both as far as the bus structure is concerned and for the processor functions envisaged for the devices intended to be connected to the structure in question.

## Objects and summary of the invention

The object of the invention is to provide an optimal solution to the above-expressed requirements.

According to the present invention this object is achieved by a process having the characteristics specifically set out in the following claims. The invention also relates to interface devices usable to perform this process.

In summary, the arrangement according to the invention is based not on the use of a communication protocol, such as a serial communication protocol, but rather on the configuration of a system capable of permitting the access time to a generic serial bus to be subdivided in an open and flexible manner among different systems which can, in turn, talk with respective different protocols and at respective different speeds (for example speeds lying between 600 and 9600 baud).

In the arrangement according to the invention the time available for each individual system is managed directly by the controlling system which - having completed its own communication requirements - makes the bus available.

It is envisaged that, in the case of extended absence of communication, any system can call the line; this is necessary in start up situations and in the case of a fault in a connected system.

The invention will now be described purely by way of non-limitative example, with reference to the attached drawings, in which:

- Figure 1 is a general arrangement which illustrates a possible form of organisation of a bus communication system operating according to the invention;
- Figure 2 is a timing diagram which illustrates schematically the variations in the signals transmitted on the bus of a communication network operating according to the invention;
- Figure 3 is a detail of the timing diagram of Figure 2;
- Figure 4 is a block schematic diagram which illustrates a possible embodiment of an interface device for use in a system operating according to the invention;
- Figures 5 and 6 are schematic flow diagrams illustrating a possible embodiment of the process according to the invention; and
- Figure 7 is a diagram which illustrates the variation of the so-called baud rate in a network operating in accordance with the process of the invention.

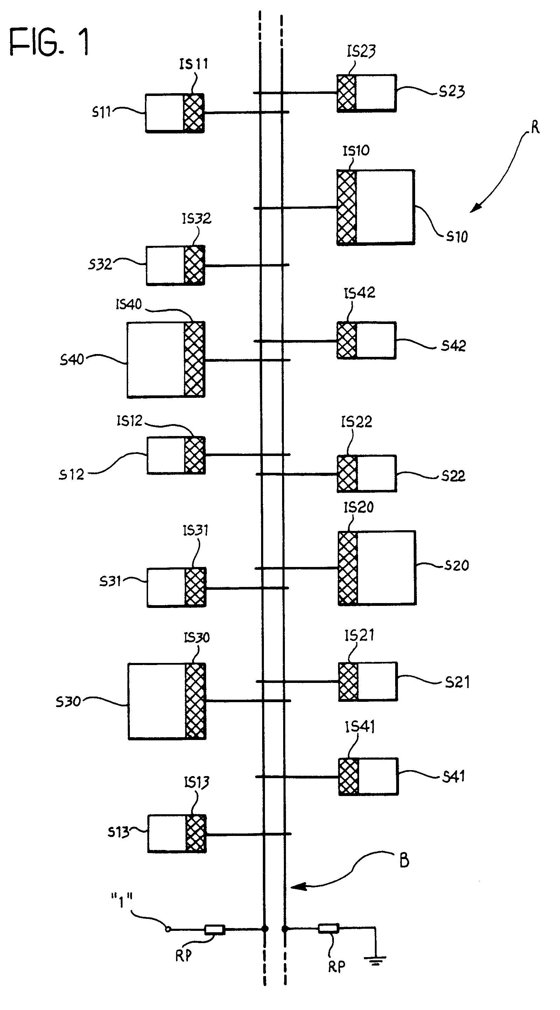

In Figure 1 the reference numeral R generally indicates a communication network configured, in a preferential application, as a domotic network installed in a building such as a civil building (not illustrated).

In practice the network R is configured in the form of a bus B constituted, in the most simple embodiment, by a telephone loop to which are connected various devices in all constituting a plurality of systems.

A first system $S_1$, comprising the elements $S_{10}$, $S_{11}$, $S_{12}$, $S_{13}$ (with the general possibility of including elements $S_{1i}$ where $i$ is any number) may be constituted, for example by a burglar alarm system. In this case the unit or module $S_{10}$ can be the so-called central control unit of the burglar alarm system, whilst the elements $S_{11}$, $S_{12}$, ... $S_{1k}$ may be constituted, for example, by intrusion sensors (infra red, radio frequency, etc.) and by indicator elements (acoustic, luminous, or remote signalling to a surveillance post etc).

Another system, generally indicated $S_2$ and comprising the elements $S_{20}$, $S_{21}$, etc., can be, for example, a thermostatic control system for the environmental heating of the building or the apartment. In this case, the module $S_{20}$ will be the central control unit of the heating system and the modules $S_{21}$, ... $S_{2k}$ may be constituted, for example, by thermostatic sensors mounted at various locations throughout the building or apartment and/or associated with individual central heating radiators or heat exchanger elements.

Again, a third system, generally indicated $S_3$ and comprising the elements $S_{30}$, $S_{31}$ etc., may be constituted, for example, by a system which allows remote control of the opening and closure of the doors of one or more zones or the opening and closure of elements such as shutters, curtains etc.

Likewise it will be easily understood that the list can be extended almost indefinitely, the flexibility and freedom to expand the system constituting the fundamental characteristics and advantages of the arrangement according to the invention.

It will also be appreciated that communication between each of the devices connected on the bus B and the bus itself can take place equally as input (for example in the case of sensors the function of which is that of injecting on to the bus the detected data intended to be read by other devices) and as output (for example in the case of devices acting as actuators driven as a result of commands transmitted on to the bus by other modules or units), and also in a bidirectional manner, as is typical in the case of the central control units $S_{10}$, $S_{20}$, $S_{30}$, $S_{40}$ which control the various systems, also called master units, configured in general both to extract data from the bus B, for example data indicative of the detections made by the sensors connected to the bus B, and to introduce data on to the bus, for example in the form of commands directed to actuator devices connected to the bus B. These devices, sensors and actuators will also be called slaves hereinafter.

In particular, the arrangement according to the invention is set up in such a way as to allow the various systems $S_1$, $S_2$, $S_3$, $S_4$ to utilise the bus B, in common with all the systems, with an entirely independent mode of communication, thus in practice allowing each system $S_1$, $S_2$, $S_3$, $S_4$ to work with its own mode of operation (protocols, speed of transmission, etc.) in a completely independent manner unaffected by the mode of operation utilised for communication by the other systems.

As already indicated in the introductory portion of the present description, in this way it is possible to achieve, among other things, two fundamental advantages:

- the linking of each system to the network R without in any way presupposing or knowing either the number, or the mode of operation of the other systems; and
- each system can be linked to and disconnected from the network R without this influencing in any way the specific mode of operation of the other systems.

As will be illustrated in more detail hereinafter, this result is obtained according to the invention by providing that the various systems can access the bus B (therefore utilising it as a physical support, with the consequent possibility of utilising modes of operation chosen with a very wide freedom) in separate intervals of time, the succession of the various systems to use the bus B being determined, according to extremely simple criteria, by the result of a conflict phase which opens whenever a system, at the end of the interval reserved for it, signals the imminent release of the bus B.

This result is obtained by providing, at the level of each of the devices of which the various systems $S_1$, $S_2$, $S_3$, ... are composed, a respective interface function (indicated in Figure 1 with the same reference used for the associated module or unit preceded by the letter "I") capable of being easily achieved at the software level with the possible integration (as will be seen better hereinafter) of a possible signal conditioning hardware module.

In practice at the level of each interface $IS_{10}$, $IS_{11}$, .... must be provided uniquely the intelligence which allows the respective device to recognise:

i) the commencement of a conflict phase following the release of the bus B by the system which has previously utilised it, and

ii) the result of the contest phase, with the consequent possibility of establishing if, in the successive interval of utilisation of the bus B, communication has been reserved to the system of which the device forms part or to another system.

The arrangement according to the invention therefore allows the division of access time to a generic bus, such as for example a serial bus, by different systems talking with very different protocols and at different speeds, for example speeds lying between 600 and 9600 baud.

Preferably, with specific attention to the possible implementation of the bus B as a telephone type loop, it is preferential to identify the rest level of the bus, that is to say the condition assumed by the bus in the absence of communication, as the line polarity equal to "1", corresponding also to the logic level of what will hereinafter be called the stop bit, and to the transmission of a logic level "1". Correspondingly, a line polarity equal to "0" is identified as the condition of engagement of the bus by a system, corresponding to the start bit and to the transmission of the logic level "0".

In these conditions, each of the interfaces $IS_{10}$, $IS_{11}$, ... is preferably configured at the hardware level so as to permit, without damage to the devices present on the line, the simultaneous transmission of a "1" and a "0", the fact remaining that the level present on the line will be the "0".

The time available for each individual system (which can be fixed at different levels in dependence on the communication requirements of the various systems) is managed directly by the controlling system which, having run through its communication requirements, makes the bus B available again.

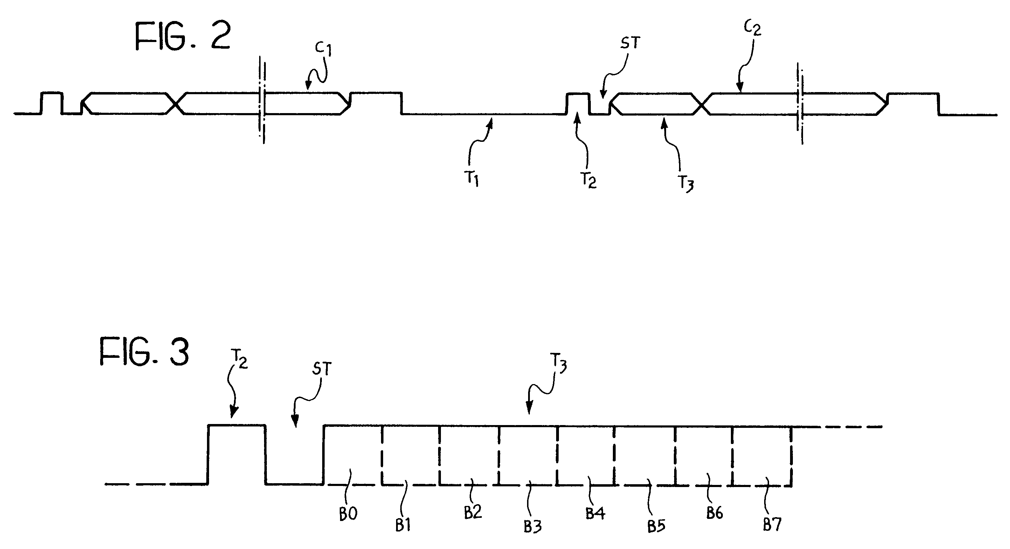

In a more specific manner and as illustrated in Figure 2, at the end of its transmission cycle, schematically indicated as $C_1$ in the timing diagram of Figure 2, the system which controls the bus maintains the logic level "0" for a first time interval $T_1$ (for example for about 16.7 ms) and then transmits the logic level "1" for a time interval $T_2$ (for example for 1.66 ms).

This event therefore constitutes a synchronisation base for all the devices connected to the bus B (whether they are masters or slaves). All these must then interpret and proceed to the formation of a byte which is transmitted for a subsequent time interval of duration $T_3$, chosen as a function of the lowest speed of those of the systems connected to the bus B (for example with reference to the speed previously indicated, namely 600 baud) and constituted by a start bit ST, a certain number (for example 8) of data bits, and a stop bit.

In dependence on the result of the conflict (which is conducted in the terms illustrated in more detail hereinafter) a new system assumes control of the bus B and performs its own transmission cycle (time interval indicated $C_2$ in the diagram of Figure 2).

With reference to the preferred embodiment mentioned above, the system which controls the bus B - having completed its communication cycle - consequently acts to maintain the bus B at "0" for a certain time interval (for example 16.7 ms). During this period all the devices present must recognise the event and then be ready to participate in the production of the conflict byte (interval $T_3$) which has the purpose of defining which system will next control the bus B.

Figure 3 is a timing diagram illustrating, for a better understanding, the terminal portion of the conflict phase hereinafter also called the system transfer. As can be seen, the start bit ST is followed by the conflict byte $T_3$ which in fact is constituted by a series of time periods $b_0$, $b_1$, $b_2$, ... $b_7$, in this specific case there being eight, each having a duration corresponding to one bit. The signal present on the bus B is normally at the "1" level in each of the bits $b_0$-$b_7$ of the conflict byte $T_3$, unless one or more of the systems linked to the bus B transmits a "0" in correspondence with that determined bit. In practice, the conflict byte $T_3$ is therefore a byte which can be transmitted and received contemporaneously by all systems connected to the bus B.

This is possible in that the start bit ST provides a synchronisation signal which allows the various systems to discriminate in a consistent manner the various periods from a bit $b_0$-$b_7$ constituting the conflict byte $T_3$. Naturally, for the purpose of allowing compatibility, the conflict byte $T_3$ must necessarily be envisaged at the minimum speed of transmission among those possible on the bus B.

At the end of the "0" period ($T_1$) the bus B is released and each device again waits a certain time interval (for example 1.66 ms) - corresponding to the interval $T_2$ -before transmitting the conflict byte $T_3$. The changeover time, with reference to the values indicated hereinabove, is therefore equal in practice to 18.36 ms plus the time $T_3$ necessary to transmit a byte at 600 baud, that is to say the minimum speed operable on the bus B. For the purpose of avoiding possible communication errors it is essential that all the devices present are able to determine if, during the period $T_1$ at "0" - there has been any transition from the "0" level to the "1" level of duration equal to or greater than the bit time at 9600 baud (104 $\mu$s). In fact, communication devices having a lower speed would be able to detect as changeover period any valid transmission which, purely by chance, could be detected by it (sampled) during the transmission of subsequent "0"s.

The achievement of this function can be implemented according to criteria known per se to the man skilled in the art, for example one of the following alternatives:

- use of single chips provided with an external interrupt port by connecting the RX line to this interrupt terminal and acting consequently via software;
- use of single chips provided with UART by acting on the software; and
- provision of an external circuit which detects these transitions and therefore maintains the logic level "0" for a time equal to the bit time utilised by that particular system; for example if the device is formed to communicate at 1200 baud, the transmission of a "0" at 9600 baud will have to cause the formation of a 1200 baud "0" bit on the reception terminal.

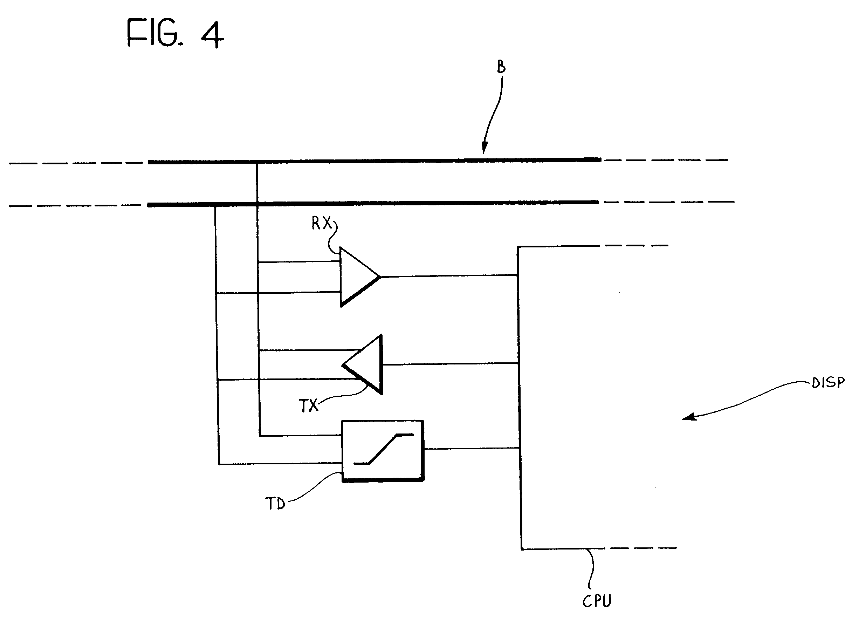

An external interface circuit relating to the latter indicated alternative will now be described by way of example with reference to Figure 4.

The interface circuit fundamentally comprises the following components:

- a receiver RX that is to say a circuit able to convert the signals present on the bus B into logic levels,
- a transmitter TX, that is to say a circuit able to convert the logic levels output by the devices DISP connected to the bus B into suitable signals,
- a transition detector TD for detecting transitions on the bus B, this detector TD informs the CPU for the various devices DISP connected to the bus B of the possible presence of transmissions on the bus B during the time that the device DISP in question is not participating in the dialogue, therefore avoiding at the same time having to configure its UART to the speed of transmission of the system having control of the bus B.

It is evident from the above that the bus B - in the rest condition, that is to say in the absence of transmission - must be in the condition such as to permit, at the output of the receiver RX, a logic level "1". Moreover, the transmission start bit ST must form a condition on the bus B which is detected as a "0" by the receiver RX.

As already mentioned, the conflict byte (interval $T_3$) is made up with the participation of all the devices present, each of which has a particular bit $b_1$, $b_2$, ... (identifying the system $S_1$ , $S_2$, ...) forming a part of it.

The byte in question, transmitted at the lowest communication speed on the system (for example 600 baud), is naturally preceded by the start bit ST. Therefore, the successive bits $b_0$-$b_7$ (for example 8 in number) determine the criteria for the performance of the conflict phase. For example, it is possible to operate with eight bits by attributing to the various bits the contents listed below:

bit $b_0$            priority
bits $b_1$-$b_6$      corresponding to the various systems present
bit $b_7$            reserved.

Each device present which intends to participate in the conflict phase will be arranged to set the corresponding bit at "0" according to rules common to all the devices present. For example, in the currently-preferred embodiment it is envisaged that the rules set out hereinbelow will be used:

- the system which gives up the line may participate immediately in the conflict on condition that at the moment when the line was previously taken up there had not been detected any access request by zeroing of bits less significant than its own;
- the conflict is won by the system which sets the most significant bit to zero; for example, if the system which controls the bit $b_5$ and the system which controls the bit $b_3$ call the line: access is granted to the system which controls the bit $b_5$ which, however, - having terminated its communication cycle - cannot again call the line until the system 3 has also been served;
- the system which intends to claim priority sets to zero not only its own bit, but also the priority bit $b_0$: the other systems, having de-

tected this bit $b_0$, can abstain from putting their request bit on the bus, or can proceed anyway to put their bit on the bus; in this case the bus B is assigned according to the preceding rule (conflict between systems which contemporaneously seek priority); the priority is then at two levels.

It is to be recorded that the formation of the logic "1"s is handled by the hardware characteristic of the transmission bus B.

At the end of the conflict byte (interval $T_3$) a victor system is determined which can access the bus B at the desired speed and according to the desired protocol. At the end of its communication this system maintains the line at "0" for the necessary time (interval $T_1$) to determine the change of control of the bus B.

In order to be able to operate according to the process of the invention each device linked to the bus B, must be consequently configured, that is to say - in the typical case - must be provided with a software portion or module able to perform the functions determined by the process according to the invention.

This software module must therefore be able to permit recognition of the commutation phase between systems, to participate in the constitution of the conflict byte $T_3$, to receive the conflict byte $T_3$ and - on the basis of the results of reading - takeover or leave control of the bus B. This software module, independently of the transmission protocol which will then be adopted by the various systems, provides the rest of the software with the line control condition and therefore allows transmission, or the no-control condition and therefore prevents transmission.

The application software, that is to say the software characteristic of each device linked to the bus B, on the other hand, will have to inform this software module of the need for this system to access the bus B, leaving it to deal with the activities necessary to obtain this access.

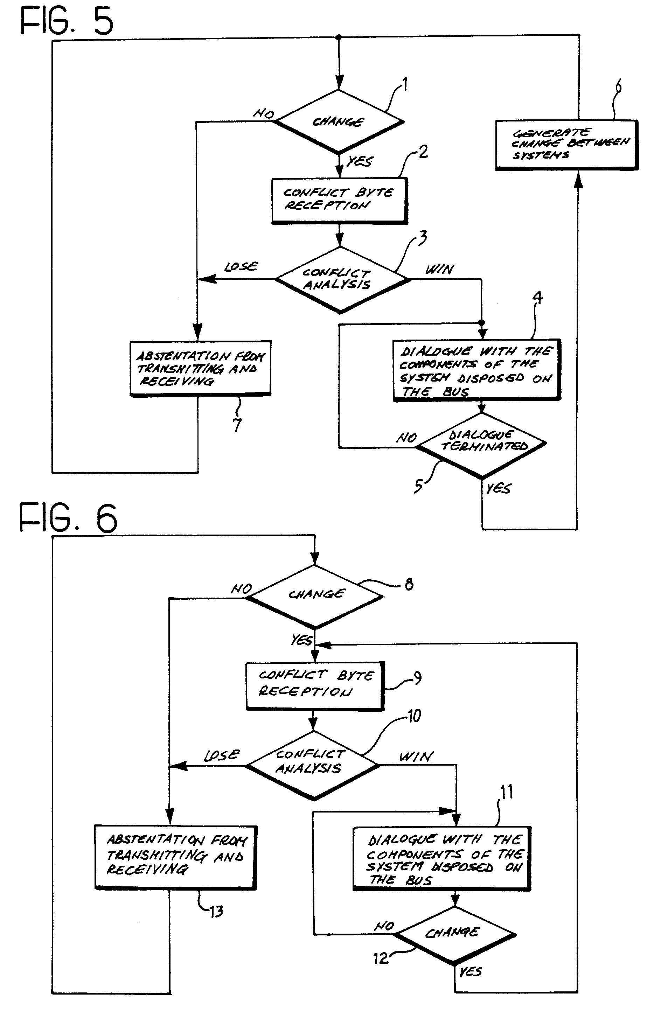

For a better understanding of the functions performed by this software module it will now be described with reference to the flow diagrams of Figures 5 and 6 in a possible embodiment for a master device (Figure 5) and a slave device (Figure 6).

A master device, if it does not have control of the bus B, typically monitors the bus B (step 1) to detect a possible changeover phase. When this changeover phase occurs the master receives (step 2) a conflict byte $T_3$ and then proceeds to check (step 3) the result (that is to say the victor system) of the conflict. If the master has won the conflict (step 4) it acquires control of the bus B which can then be utilised by its system.

When the system having control no longer needs the bus B (step 5) it starts a new changeover phase. If, on the other hand, the conflict phase (step 3) has given a negative result, that is to say if the master had not been able to gain access to the bus B, the master itself abstains (step 7) from utilising the bus B and limits itself to monitoring it (step 1) waiting for the next changeover phase.

In the case of a slave device the functions described are similar. The slave device also monitors the bus B (step 8) for the purpose of detecting possible changeover phases. When the said changeover phases occur, the device receives a conflict byte $T_3$ (step 9) which it acts to test (step 10). If the system to which the slave belongs has won access to the bus B (step 11) the slave can communicate with the other components of the system, naturally according to the internal protocol of the system.

At the end of the use of the bus B by the system (step 12) there is, naturally, a new changeover phase (step 8) with associated reception (step 9) of the conflict byte $T_3$. If, on the other hand, the testing of the conflict byte $T_3$ (step 10) had been negative, the slave abstains (step 13) from use of the bus B.

With the time values indicated above this changeover lasts for 35 ms overall. Obviously, this time is a function of the minimum speed contemplated for communication. Consequently, whenever it is considered to connect systems having as the minimum speed or byte rate values greater than 600 baud, this time is consequently reduced. For the calculation of this time the following formula is in fact valid:

$$\text{time at "0"} = 10*1/\text{minimum desired bit rate} - 0 + 1/(\text{bit rate}*2)$$
$$\text{time at "1"} = 1/\text{minimum desired bit rate} - 0 + 1/(\text{bit rate}*4) \quad \text{conflict byte} = 10*1/\text{minimum desired bit rate}.$$

As already mentioned, the process according to the invention can be implemented on different physical supports performing the function of the bus B.

For example, in the simplest embodiment, there is envisaged the use of a bus B on two wires (that is to say a normal telephone wire) including power supply. The devices linked to the bus B typically operate on "0" logic for which the "1" is the line open condition, which is ideal for the implementation of the process according to the invention on condition that transmission at the minimum and maximum desired bit rate can be achieved and that the devices connected, if as is normal, they are continuously uncoupled, can detect the changeover period.

Alternatively, the bus can be formed by using an interface of the standardised RS485 type. This interface provides the transmission of "0" and "1" equally with the prohibition of collisions. The process according to the invention can however advantageously be implemented with such an interface by arranging for the provision of the conflict byte by maintaining the input of the transmitter at "1" for the whole of the duration of the conflict byte, then arranging to drive the TX-enable only at a suitable moment.

The bus line B must however be terminated on two resistors RP (see Figure 1) which guarantee its polarisation and therefore the open line "1", supplied by the line itself, as provided by the standard.

Even though the protocol effectively utilised by each system $S_1$, $S_2$ , $S_3$ ... for communication within the individual systems can be chosen freely, it is to be noted that - when dealing with any kind of protocols - the various devices connected have to respect their own time slots to have access to the bus, whilst the master present must achieve system transfer within a convenient time.

Other particular requirements can also exist. For example, upon start up of the system it is not possible to determine who must perform the conflict phase. In this case, each master connected will have to arrange, by detecting the absence of traffic on the line, in a contingent manner, to perform the system transfer, all the others will detect it and will propose their desire to talk. In this way it is possible to start the management of the bus B in a spontaneous manner.

If there is only a single system present, it - having won the system transfer consecutively for n times - ceases to repropose it, in fact automatically excluding the operation of the process. If new systems are added it will be sufficient to operate a new start up.

A further system added, with the bus B active, after a certain time phase has expired will, whatever the state of the line, impose a commutation which is detected by all the devices present and permit this addition.

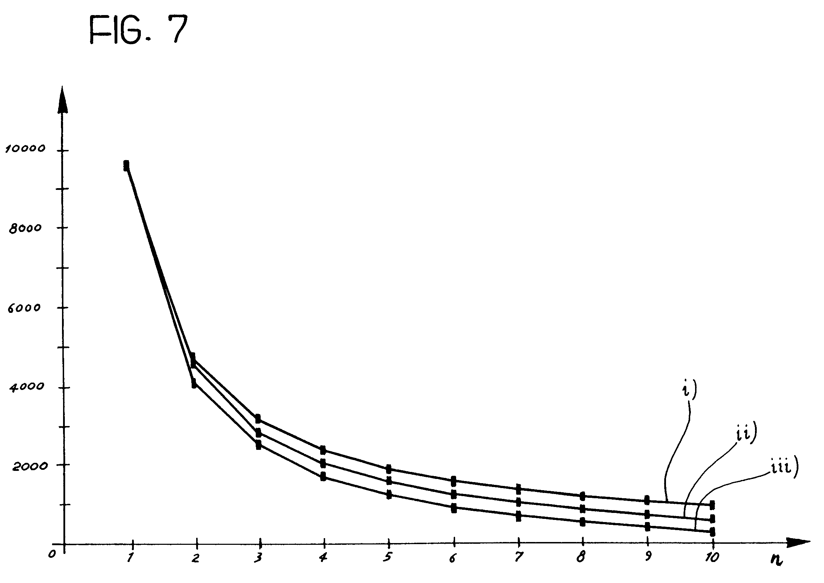

The diagram of Figure 7 indicates the variation of the equivalent baud rate (along the ordinate) as a function of the number n of systems present (on the abscissa, with n illustrated as a variable from 1 to 10) all functioning at 9600 baud during their phase of use of the bus B.

The diagram illustrates the equivalent baud rate in a comparative manner i) when the process of the invention is not utilised, ii) when the process according to the invention is employed with the hypothesis of an access time of 0.5 seconds for each individual system, and finally iii) when the process according to the invention is employed utilising an access time of 1 second. The access time corresponds to the maximum time intervening between two line connections by the same system. Therefore, the real access time of a device to the bus B is clearly less and is a function of the access time and the absolute percentage of time dedicated to the system in question.

At first sight it can be seen how the greater transmission speed is obtained without the use of the process according to the invention: it will however be noted that in this case a possible associated protocol - having to manage the various systems in a software manner - would require a greater volume of traffic.

## Claims

1. A process for controlling access to a bus (B) by a plurality of systems ($S_1$, $S_2$, ... $S_n$), each of said systems comprising a respective group of devices ($S_{10}$, $S_{11}$, ... $S_{1k}$; $S_{20}$, $S_{21}$, ... $S_{2k}$; $S_{n0}$, $S_{n1}$, ... $S_{nk}$) with a communication mode characteristic of each system ($S_1$, $S_2$, ... $S_n$), characterised in that it includes the operations of:

   - configuring the said bus (B) and the said devices in such a way that each system can commute alternatively between a bus (B) engagement condition for communication by means of the said bus (B) within the system environment, and a disengagement condition from the bus in which the system itself leaves the bus (B) free for communication by other systems,

   - generating, when each system passes from the bus (B) engagement condition to the said disengagement condition, a respective bus (B) release signal ($T_1$, $T_2$, ST) recognisable by all the said devices,

   - generating for all the said systems upon reception of the said bus (B) release signal ($T_1$, $T_2$, ST) respective conflict signals ($T_3$) the combination of which determines which of the systems will be able to pass to the bus-engaged condition, and

   - determining engagement of the bus (B) by one and only one system which is the victor in the said conflict, with consequent passage of the said one and only one system into the bus (B) engaged condition, with subsequent generation by the said victor system of a new bus (B) release signal ($T_1$, $T_2$, ST) upon completion of a respective communication phase by the said victor system.

**2.** A process according to Claim 1, characterised in that the said conflict signals are generated as bits ($b_0$ -$b_7$) constituting a word ($T_3$), each system being identified by a respective bit and by the fact that the victor system in the said conflict is identified in dependence on the significance of the respective bit within the said word ($T_3$).

**3.** A process according to Claim 2, characterised in that the said victor system in the conflict is identified as the system corresponding to the most significant bit within the said word ($T_3$).

**4.** A process according to Claim 2 or Claim 3, characterised in that the said word ($T_3$) further includes a priority bit ($b_7$) capable of being expressed by a system which accedes to the bus (B), the said priority bit being recognisable by the other systems which ask for access to the bus (B).

**5.** A process according to Claim 4, characterised in that the said other systems which ask for access to the bus (B), having recognised the presence of the said priority bit ($b_7$) imposed by another system, abstain from forwarding their bus request bit.

**6.** A process according to Claim 4, characterised in that the said other systems which ask for access to the bus (B), having recognized the presence of the said priority bit ($b_7$) imposed by another system, nevertheless forward their bus request bit, the conflict being resolved in favour of the system which has the most significant bit within the environment of the word ($T_3$).

**7.** A process according to any preceding claim, characterized in that the system which generates the said bus (B) release signal ($T_1$, $T_2$, ST) is authorised to participate again in the said conflict.

**8.** A process according to Claim 7, characterised in that the said system which has emitted the said bus (B) release signal ($T_1$, $T_2$, ST) is allowed to participate in the said conflict only if in the preceding conflict there has been detected no request for access by a system to which corresponds a less significant bit within the said word ($T_3$).

**9.** A process according to any preceding claim, characterised in that the said bus (B) release signal ($T_1$, $T_2$, ST) or the said conflict word ($T_3$) have associated therewith the generation of at least one synchronisation signal (ST) for all the devices joined to said bus (B).

**10.** A process according to any preceding claim, characterised in that the said conflict word ($T_3$) is completed by a stop bit.

**11.** A process according to any preceding claim, characterised in that it includes the operation of identifying the bus (B) polarity equal to "1" as the rest level of the bus (B), that is to say the condition assumed by the bus (B) in the absence of communication.

**12.** A process according to any preceding claim, characterised in that the bus (B) engagement condition by a system is identified with the bus (B) polarity equal to "0".

**13.** A process according to any preceding claim, characterised in that it includes, upon commencement of the process, the contingent generation of the said bus (B) release signal ($T_1$, $T_2$, ST) by all systems connected to the said bus (B).

**14.** A process according to Claim 13, characterised in that it includes the operation of detecting the absence of traffic on the bus (B) before contingent generation of the said bus (B) release signal ($T_1$, $T_2$, ST).

**15.** A process according to Claim 14, characterised in that the said devices connected to the bus (B) are configured in such a way as to be able to detect (TD) the absence of traffic on the bus (B) in all the communication modes characteristic of each system connected or connectable to the said bus (B).

**16.** A process according to Claim 15, characterised in that it allows transmission on the said bus (B) at a plurality of different speeds, and in that the said devices connected to the bus (B) are configured in such a way as to be able to detect transmission of a "0" bit on the said bus (B) at the highest speed of transmission of the said plurality of transmission speeds.

FIG. 1

FIG. 2

FIG. 3

EP 0 689 145 A1

FIG. 4

# FIG. 5

```
                    ┌──────────────┐
              NO ◄──│   CHANGE   1 │
                    └──────┬───────┘
                        YES│
                    ┌──────▼───────┐       ┌─────────────────┐
                    │ CONFLICT BYTE│       │ GENERATE        │
                    │  RECEPTION  2│       │ CHANGE BETWEEN  │ 6
                    └──────┬───────┘       │ SYSTEMS         │
                           │               └─────────────────┘
              LOSE  ┌──────▼───────┐  WIN
               ◄────│   CONFLICT  3│────►
                    │   ANALYSIS   │
                    └──────────────┘
         ┌──────────────────┐   ┌─────────────────────┐
         │ ABSTENTION FROM  │   │ DIALOGUE WITH THE   │ 4
         │ TRANSMITTING AND │   │ COMPONENTS OF THE   │
         │ RECEIVING        │   │ SYSTEM DISPOSED ON  │
         └──────────────────┘   │ THE BUS             │
                  7              └──────────┬──────────┘
                                     NO ┌───▼──────┐
                                      ◄─│ DIALOGUE │
                                        │TERMINATED│
                                      5 └────┬─────┘
                                          YES│
```

# FIG. 6

```
                    ┌──────────────┐
              NO ◄──│   CHANGE   8 │
                    └──────┬───────┘
                        YES│
                    ┌──────▼───────┐
                    │ CONFLICT BYTE│ 9
                    │  RECEPTION   │
                    └──────┬───────┘
              LOSE  ┌──────▼───────┐  WIN
               ◄────│   CONFLICT  10│────►
                    │   ANALYSIS   │
                    └──────────────┘
         ┌──────────────────┐   ┌─────────────────────┐
         │ ABSTENTION FROM  │   │ DIALOGUE WITH THE   │ 11
         │ TRANSMITTING AND │   │ COMPONENTS OF THE   │
         │ RECEIVING        │   │ SYSTEM DISPOSED ON  │
         └──────────────────┘   │ THE BUS             │
                  13             └──────────┬──────────┘
                                     NO ┌───▼──────┐
                                      ◄─│  CHANGE  │
                                        │          │
                                     12 └────┬─────┘
                                          YES│
```

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 479 229 (BULL HN INFORMATION SYSTEMS INC.)<br>* column 4, line 20 - line 55 *<br>* column 8, line 1 - column 9, line 57 *<br>* claims 1,5 *<br>--- | 1-16 | G06F13/376 |
| A | EP-A-0 517 609 (TELEMECHANIQUE)<br>* page 1, line 14 - line 41 *<br>* page 2, line 27 - line 51 *<br>* figures 2A,2B *<br>----- | 1-16 | |

**TECHNICAL FIELDS SEARCHED** (Int.Cl.6)

G06F
H04L

The present search report has been drawn up for all claims

| Place of search | Date of completion of the search | Examiner |
|---|---|---|
| THE HAGUE | 20 September 1995 | McDonagh, F |

EPO FORM 1503 03.82 (P04C01)